# EUROPEAN PATENT APPLICATION

(11) **EP 4 393 695 A1**
(43) Date of publication of application: **03.07.2024**
(21) Application number: 23220255.6
(22) Date of filing: 27.12.2023
(51) Int. Cl.: B32B 3/08, B32B 3/12, B32B 7/02, B32B 27/06, B32B 27/30, B32B 27/36, B32B 3/10

(54) **PLASTIC COMPOSITE HAVING IMPROVED LIGHTNESS AND RIGIDITY**

(30) Priority: 29.12.2022 KR 20220189835
(71) Applicant: Kolonglotech, Inc., Seoul 07793 (KR)
(72) Inventor: JUNG, Woo Jin, 10115 Gimpo-si (KR); KIM, Hyeong Gyun, 10120 Gimpo-si (KR); LEE, Chang Hee, 21026 Incheon (KR); KIM, Min Jun, 10063 Gimpo-si (KR); LEE, Seong Hyeon, 10510 Goyang-si (KR)
(74) Representative: Isarpatent

(57) **Abstract**

Example embodiments provide a plastic composite having a high degree of freedom in molding, significantly improved lightweighting characteristics, and improved rigidity. A plastic composite includes a face sheet layer consisting of poly(methyl methacrylate) (PMMA) or acrylic styrene acrylonitrile (ASA); an long fiber injection (LFI) layer disposed on a lower surface of the face sheet layer and consisting of polyurethane foam including reinforcing fiber; and a rib pattern layer formed on a lower surface of the LFI layer and comprising a plurality of ribs.

## Description

### CROSS-REFERENCE TO RELATED APPLICATION(S)

This U.S. non-provisional application claims priority under 35 USC § 119 to Korean Patent Application No. 10-2022-0189835, filed on December 29, 2022, in the Korean Intellectual Property Office, the disclosure of which is herein incorporated by reference in its entirety.

### BACKGROUND

The present disclosure relates to a plastic composite including a long fiber injection (LFI) layer and having improved lightness and rigidity.

Recently, research into high-strength plastic composites, capable of replacing metal materials such as steel for lightweighting, or the like, is actively underway. Among the high-strength plastic composites, Poly(Methyl Methacrylate) (PMMA)/LFI plastic composites are being proposed as an alternative.

PMMA/LFI plastic composites are being used to replace steel in various fields such as automobiles and aerospace. However, height of an LFI layer is excessively increased to achieve high strength. In this case, except for applications requiring a simple structure, the plastic composites may not be molded or may not provide sufficient rigidity, which causes a lightweighting effect to be significantly reduced. Therefore, techniques are required to address the above issues.

### SUMMARY

Example embodiments provide a plastic composite having a high degree of freedom in molding, significantly improved lightweighting characteristics, and improved rigidity.

The present inventors have completed the present invention through a detailed study to discover that rib patterns were formed at a certain height ratio, compared to an LFI layer in plastic composites, to obtain a plastic composite, having a high degree of freedom in molding, significantly improved lightweighting characteristics, and the rigidity sufficient, which is capable of replacing conventional steel materials.

Therefore, the present disclosure provide a plastic composite includes a face sheet layer consisting of poly(methyl methacrylate) (PMMA) or acrylic styrene acrylonitrile (ASA); an long fiber injection (LFI) layer disposed on a lower surface of the face sheet layer and consisting of polyurethane foam including reinforcing fiber; and a rib pattern layer formed on a lower surface of the LFI layer and comprising a plurality of ribs.

In the plastic composite of the present disclosure, the LFI layer may include 15 to 60 weight % of the reinforcing fiber and 40 to 85 weight % of the polyurethane foam.

In the plastic composite of the present disclosure, the reinforcing fiber may be glass fiber having a length of 2 to 80 mm.

In the plastic composite of the present disclosure, the rib may have a height of 3 to 60 mm.

In the plastic composite of the present disclosure, the rib may have a height, 1 to 20 times a height of the LFI layer.

In the plastic composite of the present disclosure, the rib may have a width of 3 to 60 mm.

In the plastic composite of the present disclosure, the rib pattern layer may include a rib pattern that is a straight pattern, a grid pattern, a honeycomb pattern, or a diamond pattern.

In the plastic composite of the present disclosure, a distance between the ribs of the straight pattern may be10 to 30 mm.

In the plastic composite of the present disclosure, the grid pattern, the honeycomb pattern, or the diamond pattern is provided with 10 to 30 patterns per 1 m².

In the plastic composite of the present disclosure, may further comprise an acrylonitrile butadiene styrene copolymer (ABS) layer disposed between the face sheet layer and the LFI layer.

### BRIEF DESCRIPTION OF DRAWINGS

FIG. 1 is a diagram illustrating a structure of a plastic composite according to an example embodiment of the present disclosure.
FIGS. 2A to 2D are diagrams, respectively illustrating a diamond pattern (FIG. 2A), a straight pattern (FIG. 2B), a grid pattern (FIG. 2C), and a honeycomb pattern (FIG. 2D) of a rib pattern layer according to an example embodiment of the present disclosure.
FIG. 3 is a diagram illustrating a structure of a plastic composite further including an ABS layer according to an example embodiment of the present disclosure.
FIGS. 4A and 4B are diagrams illustrating experimental methods for measuring the amount of 3-point load deformation of a plastic composite according to the present disclosure.

### DETAILED DESCRIPTION

Hereinafter, example embodiments of the present disclosure will be described in detail with reference to the accompanying drawings so that those skilled in the art can easily implement it. However, the present disclosure can be implemented in various forms and is not limited to the example embodiments described in this specification. Throughout the specification, similar parts are denoted by the same reference numerals.

In the present disclosure, when terms such as "about," "approximately," or similar expressions such as "at least" are used in relation to numerical values, theoretical, experimental, statistical, or empirical error of ±10%, ±7%, ±5%, ±3%, ±2%, or ±1% is intended to be acceptable with respect to a corresponding numerical value.

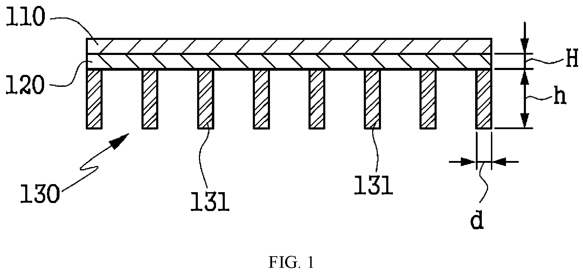

The structure of a plastic composite according to an example embodiment of the present disclosure is shown in FIG. 1.

Referring to FIG. 1, the plastic composite 100 may include a face sheet layer 110 consisting of PMMA or ASA, an LFI layer 120 disposed on a lower surface of the face sheet layer 110 and made of polyurethane foam including reinforcing fibers, and a rib pattern layer 130 formed on a lower surface of the LFI layer 120 and including a plurality of ribs 131.

In the present disclosure, the face sheet layer 110 is a layer that improves the rigidity, scratch resistance and wear resistance of the plastic composite 100, and may consist of PMMA or ASA.

The face sheet layer 110 is disposed on the surface when the plastic composite of the present disclosure is used as an exterior material part of automobiles, agricultural machinery, etc., and may improve scratch resistance and aesthetic functions such as color of the part as a surface.

In the present disclosure, the LFI layer 120 is a layer that improves the rigidity of the plastic composite 100 and includes polyurethane foam including reinforcing fibers.

The LFI layer 120 may include 15 to 60 weight % of reinforcing fibers and 40 to 85 weight % of polyurethane foam, and preferably include 20 to 45 weight % of reinforcing fibers and 55 to 80 weight % of polyurethane foam. The LFI layer 120 may include, more preferably, 30 to 40 weight % of reinforcing fibers and 60 to 70 weight % of polyurethane foam. When the content of the reinforcing fibers is less than 15 weight %, the mechanical rigidity of the plastic composite 100 may be reduced, and when it exceeds 60 weight %, the wettability and the adhesion between the polyurethane resin and the glass fiber may be reduced.

Additionally, the reinforcing fiber may be glass fiber with a length of 2 to 80 mm, preferably with a length of 5 to 50 mm, and more preferably with a length of 10 to 40 mm. When the length of the reinforcing fiber is less than 2 mm, the rigidity of the plastic composite 100 may be reduced. When the length of the reinforcing fiber exceeds 80 mm, it may be difficult to mix the reinforcing fiber with polyurethane foam, resulting in an increase in brittleness of the plastic composite 100 and a decrease in the degree of freedom in molding the plastic composite 100.

In the present disclosure, the rib pattern layer 130 is a layer that reduces the weight of the plastic composite 100 and maximizes rigidity. The rib pattern layer 130 is formed on the lower surface of the LFI layer 120, and includes a plurality of ribs 131.

Specifically, the height h of the rib 131 may be 3 to 60 mm, preferably 10 to 25 mm, and more preferably 15 to 22 mm. When the height h of the rib 131 is less than 3 mm, the rigidity of the plastic composite 100 is reduced, and accordingly, when the plastic composite is used as a flat board, the amount of deformation of the flat board under 3-point loading may increase. When the height h of the rib 131 exceeds 60 mm, the degree of freedom in molding and the weight reduction rate of the plastic composite 100 may be reduced.

In addition, in the plastic composite 100 according to the present disclosure, the rib 131 may be formed to have a height h of 1 to 20 times, preferably 3 to 8 times, the height H of the LFI layer 120 to secure the degree of freedom in molding in a manufacturing process and to significantly increase the lightweighting effect. When the height of the rib 131 is less than 1 times the height H of the LFI layer 120, an improvement rate of the rigidity of the plastic composite 100 may be reduced. When the height of the rib 131 exceeds 10 times the height H of the LFI layer 120, the brittleness of the plastic composite 100 may increase and the degree of freedom in molding may decrease.

Additionally, the width d of the rib 131 may be 3 to 60 mm, preferably 10 to 25 mm, and more preferably 15 to 22 mm. When the width d of the rib 131 is less than 3 mm, it may be difficult to form a rib pattern, and the rigidity of the plastic composite 100 is reduced. Accordingly, when the plastic composite is used as a flat board, the amount of deformation of the flat board under 3-point loading may increase. When the width d of the rib 131 exceeds 60 mm, the degree of freedom in molding and the weight reduction rate of the plastic composite 100 may decrease.

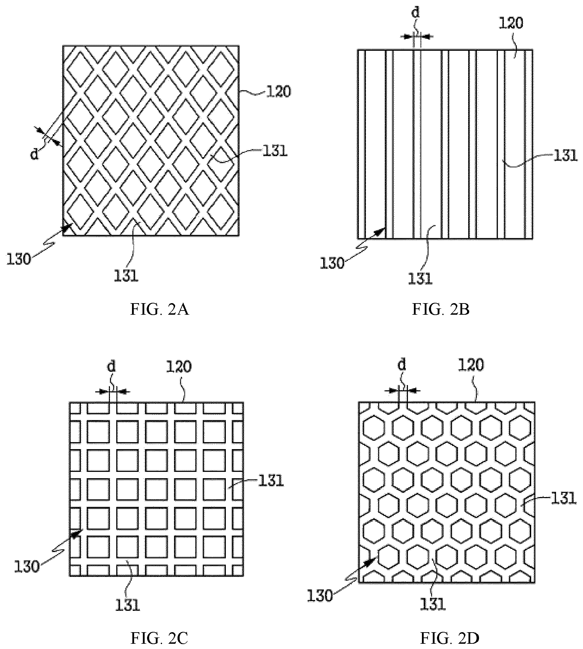

FIGS. 2A to 2D illustrate the representative types of the rib pattern layer 130 applicable to the plastic composite 100 according to an example embodiment, but example embodiments are not limited thereto. The rib pattern layer 130 may be formed in a diamond pattern (see FIG. 2A), a straight pattern (see FIG. 2B), a grid pattern (see FIG. 2C), or a honeycomb pattern (see FIG. 2D).

Referring to FIGS. 2A to 2D, in the present disclosure, the rib pattern may be a straight pattern, a grid pattern, a honeycomb pattern, or a diamond pattern, and preferably may be a honeycomb pattern.

Specifically, when the rib pattern is a straight pattern (i.e., a plurality of linear rib patterns arranged in parallel), a distance between the ribs 131 may be 10 to 30 mm, and preferably 15 to 25 mm. When the distance between the ribs 131 is less than 10 mm, a weight reduction rate of the plastic composite 100 may be reduced. When the distance between the ribs 131 exceeds 30 mm, the rigidity of the plastic composite 100 may be reduced.

Additionally, when the rib pattern is a grid, a honeycomb, or a rhombus, 10 to 30 patterns may be formed per 1 m², and preferably 15 to 25 patterns may be formed per 1 m². When the number formed per 1 m² is less than 10, the rigidity of the plastic composite 100 may be reduced. When the number formed per 1 m² is exceeds 30, the weight reduction rate of the plastic composite 100 may be reduced.

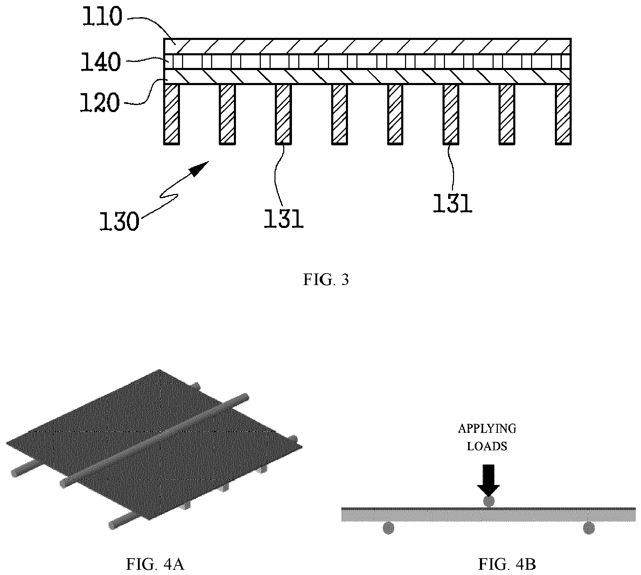

As another example embodiment of the present disclosure, the structure of a plastic composite further including an ABS layer according to the present disclosure is shown in FIG. 3.

Referring to FIG. 3, the plastic composite 100 according to the present disclosure may further include an ABS layer 140 disposed between the face sheet layer 110 and the LFI layer 120. The ABS layer 140 may further improve the rigidity of the plastic composite 100.

The plastic composite 100 according to the present disclosure may be prepared using a polyurethane high-pressure foaming molder including a mold commonly used in the art, through the following processes:
placing the face sheet 110 on a lower mold; injecting polyurethane including reinforcing fibers and a foaming agent onto the face sheet 110; preparing the plastic composite 100 by closing an upper mold and foaming polyurethane at 30 to 120°C, preferably 40 to 70°C to form the LFI layer 120 and the rib pattern layer 130; and separating the plastic composite 100 from the mold.

In this case, an ABS film may be placed on an upper surface of the face sheet 110 before injection of the polyurethane.

The plastic composite prepared according to the present disclosure may be used as an exterior material for automobiles, agricultural machinery, etc.

Hereinafter, the present disclosure will be described in more detail through specific examples and experimental examples.

### Example 1

A high-pressure urethane foaming molder including a mold is prepared. A PMMA face sheet with a thickness of 1 mm is placed on the lower mold of the high-pressure urethane foaming molder, and an ABS film with a thickness of 1 mm is placed on top of the PMMA face sheet. Subsequently, 35 weight % of glass fibers with a length of 30 mm and 65 weight % of polyurethane mixed with 1 weight % of azodicarbonamide (foaming agent) are mixed with each other and injected onto the PMMA face sheet. Subsequently, to form an LFI layer and a rib pattern layer, the upper mold is closed and polyurethane is foamed at about 60°C. Subsequently, the plastic composite is separated from the mold.

A rib pattern of the prepared plastic composite was formed in a honeycomb or grid shape, with 20 patterns per 1 m². The ribs had a height of 20 mm, approximately 6.67 times the height of the LFI layer (3 mm), and a width of 20 mm.

### Example 2

A plastic composite was prepared in the same manner as in Example 1, except that the height of a rib was 5 mm, approximately 1.67 times the height of an LFI layer (3 mm).

### Example 3

A plastic composite was prepared in the same manner as in Example 1, except that the height of a rib was 10 mm, approximately 3.33 times the height of an LFI layer (3 mm).

### Example 4

A plastic composite was prepared in the same manner as in Example 1, except that the height of a rib was 30 mm, approximately 10 times the height of an LFI layer (3 mm).

### Example 5

A plastic composite was prepared in the same manner as in Example 1, except that the height of a rib was 40 mm, approximately 13.3 times the height of an LFI layer (3 mm).

### Example 6

A plastic composite was prepared in the same manner as in Example 1, except that the height of a rib was 40 mm, approximately 13.3 times the height of an LFI layer (3 mm).

### Example 7

A plastic composite was prepared in the same manner as in Example 1, except that the width of a rib was 5 mm.

### Example 8

A plastic composite was prepared in the same manner as in Example 1, except that the width of a rib was 10 mm.

### Example 9

A plastic composite was prepared in the same manner as in Example 1, except that the width of a rib was 30 mm.

### Example 10

A plastic composite was prepared in the same manner as in Example 1, except that the width of the ribs was 40 mm.

### Example 11

A plastic composite was prepared in the same manner as in Example 1, except that the width of the rib was 50 mm.

### Comparative Example

A high-pressure urethane foaming molder including a mold is prepared. A PMMA face sheet with a thickness of 1 mm is placed on the lower mold of the high-pressure urethane foaming molder, and an ABS film with a thickness of 1 mm is placed on top of the PMMA face sheet. Subsequently, 35 weight % of glass fibers with a length of 30 mm and 65 weight % of polyurethane mixed with 1 weight % of azodicarbonamide (foaming agent) are mixed with each other and injected onto the PMMA face sheet. Subsequently, to form an LFI layer and a rib pattern layer, the upper mold is closed and polyurethane is foamed at about 60°C. Subsequently, the plastic composite is separated from the mold.

The prepared plastic composite was a composite without rib pattern, and the height of the LFI layer was 3 mm.

### Experimental Example

The plastic composites prepared in Examples 1 to 11 and Comparative Example were formed into flat boards with a width of about 500 mm and a length of about 500 mm, and the amounts of deformation thereof were measured using the following measurement method, and the results are listed in Table 1 below.

### [Measurement Method]

Amount of Flat Board Deformation: After fixing the plastic composite as shown in FIGS. 4A and 4B, the load of 3000N was applied in the -Z direction to measure the amount of flat board deformation in the -Z direction.

Weight: Measured using a scale.

**[Table 1]**

| Category | Amount of Flat Board Deformation (mm) | Weight (kg) | Rib Height (mm) | Rib Width (mm) |
|---|---|---|---|---|
| Example 1 | 3 | 2.1 | 20 | 20 |
| Example 2 | 70 | 1.5 | 5 | 20 |
| Example 3 | 46 | 1.7 | 10 | 20 |
| Example 4 | 1.1 | 2.5 | 30 | 20 |
| Example 5 | 0.6 | 2.8 | 40 | 20 |
| Example 6 | 0.4 | 3.2 | 50 | 20 |
| Example 7 | 16 | 1.5 | 20 | 5 |
| Example 8 | 8 | 1.7 | 20 | 10 |
| Example 9 | 2 | 2.5 | 20 | 30 |
| Example 10 | 1.6 | 2.8 | 20 | 40 |
| Example 11 | 1.4 | 3.2 | 20 | 50 |
| Comparative Example | Unmeasurable | 1.3 | - | - |

Referring to Table 1 above, in the case in which the height of the rib was varied (Examples 1 to 6), it can be confirmed that the amount of flat plate deformation is 3 mm or less when the height of the ribs is 20 mm or more, but is 46 mm or more when the height of the ribs is less than 20 mm. In addition, it can be confirmed that a decrease in flat plate deformation amount is not large, compared to an increase in weight, when the height of the rib exceeds 20 mm.

In the case in which the width of the rib was varied (Example 1, Examples 7 to 11), it can be confirmed that the amount of the flat board deformation is 3 mm or less when the width of the rib is 20 mm or more, but is 8 mm or more when the width of the rib is less than 20 mm. In addition, it can be confirmed that a decrease in the amount of the flat board deformation is not large, compared to an increase in weight, when the width of the rib exceeds 20 mm.

That is, as can be seen from the experimental result, an optimal effect may be exhibited when the rib has a height of 20 mm and a width of 20 mm.

As set forth above, according to example embodiments, a plastic composite may include a rib pattern layer, formed on a lower surface of an LFI layer, to achieve lightweighting while meeting required rigidity. The plastic composite may include a rib layer, formed at a specific ratio of height to height of the LFI layer, to have significantly increased rigidity.

While the preferred embodiments of the present disclosure have been described in detail above, the scope of the present disclosure is not limited thereto. Various modifications and improvements made by those skilled in the art using the basic concept of the present disclosure, as defined in the following claims, also fall within the scope of the present disclosure.

## Claims

1. A plastic composite, comprising:
a face sheet layer consisting of poly(methyl methacrylate) (PMMA) or acrylic styrene acrylonitrile (ASA);
an long fiber injection (LFI) layer disposed on a lower surface of the face sheet layer and consisting of polyurethane foam including reinforcing fiber; and
a rib pattern layer formed on a lower surface of the LFI layer and comprising a plurality of ribs.

2. The plastic composite of claim 1, wherein the LFI layer comprises 15 to 60 weight % of the reinforcing fiber and 40 to 85 weight % of the polyurethane foam.

3. The plastic composite of claim 1, wherein the reinforcing fiber is glass fiber having a length of 2 to 80 mm.

4. The plastic composite of claim 1, wherein the rib has a height of 3 to 60 mm.

5. The plastic composite of claim 1, wherein the rib has a height, 1 to 20 times a height of the LFI layer.

6. The plastic composite of claim 1, wherein the rib has a width of 3 to 60 mm.

7. The plastic composite of claim 1, wherein the rib pattern layer comprises a rib pattern that is a straight pattern, a grid pattern, a honeycomb pattern, or a diamond pattern.

8. The plastic composite of claim 7, wherein a distance between the ribs of the straight pattern is 10 to 30 mm.

9. The plastic composite of claim 7, wherein the grid pattern, the honeycomb pattern, or the diamond pattern is provided with 10 to 30 patterns per 1 m².

10. The plastic composite of claim 1, further comprising:
an acrylonitrile butadiene styrene copolymer (ABS) layer disposed between the face sheet layer and the LFI layer.
